# EUROPÄISCHE PATENTANMELDUNG

(11) **EP 1 176 408 A2**
(43) Veröffentlichungstag der Anmeldung: **30.01.2002**
(21) Anmeldenummer: 01117246.7
(22) Anmeldetag: 17.07.2001
(51) Int. Cl.: G01L 1/22, G01L 9/04

(54) **Biegebalkensensor mit Widerstandselementen**

(30) Priorität: 25.07.2000 DE 10036495
(71) Anmelder: AB Elektronik GmbH, 59368 Werne (DE)
(72) Erfinder: Bojarski, Aldo, 01774 Obercunnersdorf (DE); Dietze, Klaus, 01738 Colmnitz (DE); Fichte, Werner, 01738 Colmnitz (DE); Leonhardt, Ulrich, 01774 Pretzschendorf (DE)
(74) Vertreter: Hoffmeister, Helmut, Dr.

(57) **Zusammenfassung**

Damit eine Kraftmeßvorrichtung einfach herstellbar ist und genaue Meßwerte abgibt, ist in ein Trägerkörperelement (34) entlang einer Schnittlinie (36, 38) bis zu einer Biegelinie (33) wenigstens ein Zungenabschnitt (37, 38) angeschnitten. Auf das Trägerkörperelement (34) ist in der Biegelinie (33) und zu einer Seite der Schnittlinie (36, 38) wenigstens ein Widerstandselement (R1, R2, R3, R4) angeordnet.

## Beschreibung

Die Erfindung betrifft eine Kraftmeßvorrichtung, die wenigstens ein Trägerkörperelement aufweist, auf das eine Kraft gerichtet ist und auf dem Widerstandselemente angeordnet sind.

Eine Vorrichtung der eingangs genannten Art ist aus der US 4,311,980 bekannt. Auf einem Trägerkörper, der einseitig eingespannt ist, sind im Biegebereich Widerstände aufgebracht. Als Trägermaterial kommen Keramik- oder Silizium-Scheiben zum Einsatz. Die Widerstände und die Leitungsverbindungen werden in Dickschicht-Technik hergestellt.

Nachteilig ist, daß die Widerstände auf der Vorder- und Rückseite oft nicht im gleichen Prozeßschritt herstellbar sind und eine hochwertige Wheatstonebrücke mit guter Unterdrückung von Temperatur- und Offsetfehlern und optimaler Signalausbeute durch Verstimmung aller vier Widerstände nur schwer realisierbar ist.

Aus der US 4,576,052 ist eine Trägerplatte aus Silizium bekannt, auf der auf einer Membranfläche vier Widerstände angeordnet sind, die zu einer Wheatstonbrücke zusammengeschaltet sind. In das Siliziumplättchen sind darüber hinaus weitere Schaltkreiselemente eingebracht.

Nachteilig ist, daß bei einer Anordnung der Meßbrücke auf der Membran die Wandlerfunktion nicht linear ist.

Es stellt sich daher die Aufgabe, eine Vorrichtung der eingangs genannten Art so weiter zu entwickeln, das sie einfach herstellbar ist und genaue Meßwerte abgibt.

Erfindungsgemäß wird diese Aufgabe durch die Merkmale des Anspruches 1 gelöst.

Die mit der Erfindung erzielten Vorteile bestehen insbesondere darin, daß ein Biegebalkensensor mit hoher Linearität des erzeugten Signals bei gleichzeitig hoher Empfindlichkeit entsteht. Der relativ einfache Aufbau erlaubt es, daß die Zungenabschnitte in das Trägerkörperelement integriert werden können, so daß diese nicht zusätzlich befestigt werden müssen, was in Abhängigkeit von der Verbindungsart zu Festigkeitsproblemen sowie zu Nichtlinearitäten, zu unerwünschten Temperaturabhängigkeiten und Driften des Ausgangssignals führen kann. Darüber hinaus ist ein geringer Offset gewährleistet, da sich die nötigen Widerstandselemente alle auf einer Seite des Trägerkörpereiements befinden und bei geeigneter Gestaltung auch mit geringem räumlichen Abstand zueinander angeordnet werden können, wodurch sich eine hohe Reproduzierbarkeit der Parameter bei einfacher kostengünstiger Technologie ergibt. Die elektrischen und mechanischen Parameter können auf einfache Art und Weise variiert und den jeweiligen Erfordernissen angepaßt werden, in dem die Stegbreiten, auf denen sich die Widerstände befinden und die Materialstärke verändert werden.

In der Biegelinie können in einer Streckzone zwischen der Schnittlinie daneben liegenden Stauchzonen Widerstandselemente angeordnet sein. Hierdurch ergeben sich für den Ein- und Zwei-Zungen-Biegebalken jeweils zwei Möglichkeiten für die Zusammenschaltung von Wheatstonebrücken.

In der ersten Realisierungsmöglichkeit kann ein Widerstandselement in der Stauchzone und ein weiteres Widerstandselement in einer der Streckzone angeordnet sein. Hierdurch steht eine Halbbrücke mit einer entsprechenden Signalausbeute zur Verfügung.

In der zweiten Realisierungsmöglichkeit können in der Streckzone zwei Widerstandselemente und rechts und links von der Streckzone neben der Zungenschnittlinie in einer Stauchzone ein Widerstandselement und in einer weiteren Stauchzone ein weiteres Widerstandselement angeordnet sein. Hierdurch läßt sich eine Wheatstonevollbrücke mit hoher und genauer Signalausbeute realisieren.

In das Trägerelement kann entlang einer Hauptzungen-Schnittlinie bis zur Biegelinie ein Hauptzungenkörper und dem Hauptzungenkörper gegenüberliegend entlang einer Zusatzschnittlinie bis zur Biegelinie ein Zusatzzungenkörper eingeschnitten werden. Hierdurch entsteht ein Zwei-Zungen-Biegebalken mit Ringträgerelement, das die Biege-und Stauchzonen mit den Brückenwiderständen ringförmig umschließt, was für die Montage des gesamten Sensorelements voeteilhaft sen kann, insbesondere dadurch, daß damit eine Dichtfläche zur Verfügung steht, die die Anwendung des Biegebalkens u. a. in Druckmeßeinrichtungen ermöglicht. Durch die Anordnung der zug- bzw. druckempfindlichen Widerstände in der Stauch- und den gegenüberliegenden Streckzonen läßt sich eine Wheatstonbrücke aufbauen, die genaueste Meßwerte ermittelt.

Die Spaltdicke der Hauptzungen-Schnittlinie und der Zusatzzungen-Schnittlinie können zwischen 0,001 bis 2 mm betragen. Als fertigungstechnisch realisierbare und günstige Spaltdicke hat sich 0,1 mm in der Dickschichttechnik erwiesen.

Für die Realisierung der Wheatstonbrücke mit Hilfe der Widerstandselemente bieten sich als Fertigungstechniken an:

### a) Dickfilm-Technik

Die Dickfilm-Technik ist eine Form der Schichttechnik, bei der die Schichtdicke um 30 µ liegt. Es werden entsprechende Substrate für die Ausbildung der Widerstandselemente und der Leiterbahnen zum Einsatz gebracht.

### b) Dünnfilm-Technik

Bei der Dünnfilm-Technik betragen die Schichtdicken einen Größenbereich von 10 bis 500 nm zur Herstellung der Widerstandselemente und Leiterbahnen. In der Dünnfilm-Technik werden Verfahren der Aufdampfungstechnik und der Ionenstrahlzerstäubung angewandt. Mittels chemischer Behandlung ist es dann noch möglich, auf bereits aufgebrachten Schichten durch chemische Reaktionen neue Schichten zu bilden.

### c) Silizium-Technik

Hier werden die Widerstandselemente und Leiterbahnen in speziellen Oberflächenbehandlungsverfahren eingebracht. Von Vorteil ist es, daß hierbei Halbleiter-Bauelemente, zum Beispiel Transistoren, Dioden, und dergleichen zur Realisierung integrierter Schaltkreise mit vorgesehen werden können. Im Ergebnis entsteht ein integrierter Schaltkreis, der entsprechend verbondet und gehäust werden kann.

Die Befestigung des Trägerkörperelements mit den Widerstandselementen bei Verwendung als Kraftstoffmeßeinrichtung kann u. a. in Kraftableitungspunkten des Trägerelements erfolgen.

Für die Kapselung der Trägerkörperelemente mit den Widerstandselementen und den Zungenabschnitten, insbesondere bei der Verwendung des Biegebalkens in Druckmeßeinrichttungen bestehen zwei Möglichkeiten.

Die erste Möglichkeit besteht darin, daß auf der Auflage- und Dichtfläche des Trägerkörperelements ein erstes umlaufendes elastisches Dichtungselement und auf der der Auflage- und Dichtfläche gegenüberliegenden Fläche ein zweites elastisches Dichtungselement aufgelegt wird. Das Gehäuseelement ist in diesem Fall als ein Gehäusekörper ausgebildet, der wenigstens teilweise durch ein erstes Basiskörperelement verschlossen werden kann, wobei das erste elastische Dichtungselement vom Gehäusekörper und das zweite elastische Dichtungselement vom Basiskörper an das Trägerkörperelement eingedrückt wird.

Die zweite Variante besteht darin, daß auf der Auflage- und Dichtfläche des Trägerkörperelements ein drittes umlaufendes elastisches Dichtungselement und auf der der Auflage- und Dichtfläche gegenüberliegenden Fläche ein umlaufendes Unterlegringelement mit eingearbeiteter Aussparung als Anschlag und Überlastsicherung für das angeordnet sein kann. Das Meßgehäuseelement ist in diesem Fall das Deckelkörperelement ausgebildet, das gegenüber einem zweiten Basiskörperelement angeordnet sein kann, wobei das dritte Dichtungselement vom Deckelkörperelement und das Unterlegringelement vom zweiten Basiskörperelement angedrückt werden kann.

Ein Gelschichtkörper ist dabei vom ersten bzw. vom zweiten elastischen Dichtungselement umfaßt. Das erste, zweite und dritte elastische Dichtungselement ist jeweils als Ringdichtungselement mit einem im wesentlichen runden Querschnitt ausgebildet. Als Material für dieses Dichtungselement kommen Gummi, Silikon oder dergleichen zum Einsatz. Das Unterlegringelement kann, entsprechende Dimensionierung vorausgesetzt, Teil des Deckelkörperelements sein. Es muß nicht unbedingt in die Scheibe integriert werden. Bei Auftreten von Unterdruck kann sich eine Überlastsicherung auch im Deckelkörperelement befinden. Zum Ausgleich von Fertigungstoleranzen kann es sinnvoll sein, die Überlastsicherung einstellbar zu gestalten.

Die Verbindung zwischen den einzelnen Teilen kann durch übliche Verbindungsverfahren, wie Schrauben, Bonden, Schweißen, Kleben oder dergleichen erfolgen.

Die Erfindung ist in der Zeichnung dargestellt und wird im folgenden näher beschrieben. Es zeigen
- Fig. 1: eine erste Ausführungsform eines Biegebalkensensors in einer schematischen, perspektivischen Darstellung,
- Fig. 2: eine zweite Ausführungsform eines Biegebalkensensors in einer schematischen, perspektivischen Darstellung,
- Fig. 3: eine dritte Ausführungsform eines Biegebalkensensors in einer schematischen, perspektivischen Darstellung,
- Fig. 4: eine aus den Widerstandselementen eines Biegebalkensensors gemäß den Fig. 1 bis 3 gebildete WheatstoneBrücke,
- Fig. 5: eine modifizierte Ausführungsform eines Biegebalkensensors gemäß Fig. 2 in einer schematisch dargestellten Draufsicht,
- Fig. 6: einen in einen Drucksensor eingesetzten Biegebalkensensor gemäß Fig. 5 in einer schematisch dargestellten Draufsicht,
- Fig. 7: einen Schnitt durch einen Drucksensor gemäß Fig. 6 entlang der Linie VII - VII in einer schematischen, perspektivischen Darstellung,
- Fig. 8: einen weiteren Drucksensor mit einem eingespannten Biegebalkensensor gemäß Fig. 5 in einer schematischen, perspektivischen Schnittdarstellung und
- Fig. 9: eine Draufsicht auf die Schnittdarstellung eines Drucksensors gemäß Fig. 8 in einer schematischen Darstellung

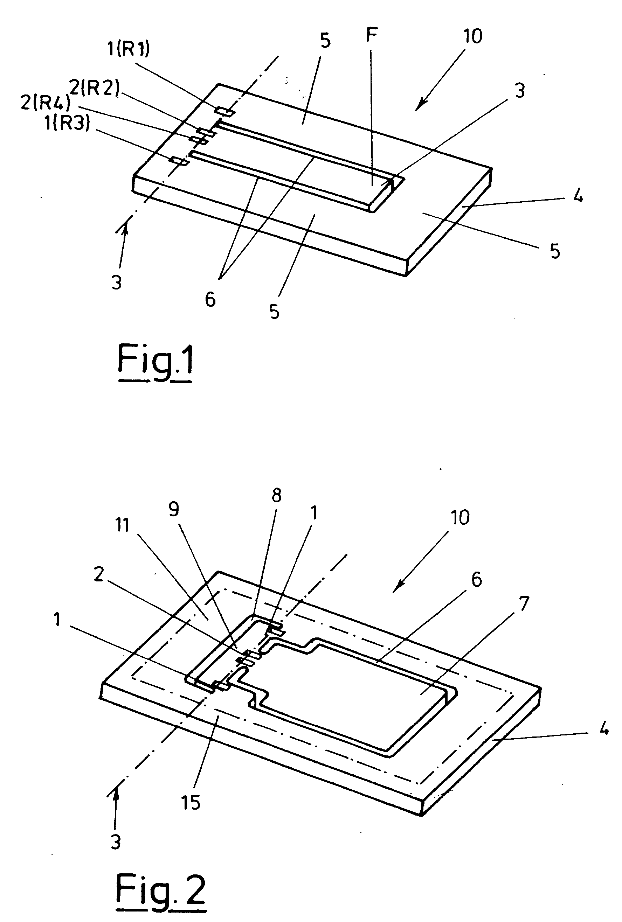

In Fig. 1 ist ein Biegebalkensensor 10 dargestellt. Er besteht aus einem Keramikplattenkörper 4, in den eine U-förmige Hauptzungen-Schnittlinie 6 bis zu einer Biegelinie 3 eingeschnitten ist. Die U-förmige Hauptzungen-Schnittlinie 6 schneidet einen Hauptzungenkörper 7 aus.

In der Biegelinie 3 sind in einer links und rechts der Hauptzungen-Schnittlinie liegenden Streckzone jeweils ein Widerstandselement R1 und ein Widerstandselement R3 aufgebracht. In einer zwischen der Hauptzungen-Schnittlinie liegenden Streckzone sind nebeneinander ebenfalls in der Biegelinie zwei Widerstandselemente R2 und R4 aufgebracht. Mit 5 sind Kraftableitungspunkte bezeichnet, in denen eine Kraft F, die auf den Hauptzungenkörper 7 wirkt, abgeleitet werden kann.

Der in Fig. 2 dargestellte Biegebalkensensor 10 unterscheidet sich von dem gemäß Fig. 1 dadurch, daß der durch die Hauptzungen-Schnittlinie 6 ausgeschnittene Hauptzungenkörper 7 ein Zusatzzungenkörper 9 gegenüberliegt, der durch eine im wesentlichen U-förmige Zusatzzungen-Schnittlinie 8 aus dem Keramikplattenkörper 4 ausgeschnitten ist. Der Zusatzzungenkörper 9 geht ebenfalls bis zur Biegelinie 3 und umfaßt die beiden Stauchzonen 1, in denen die Widerstandselemente, im folgenden Widerstände R1 und R3 aufgebracht sind. In der Streckzone sind die beiden Widerstände R2 und R3 aufgebracht. Die Hauptzungenschnittlinie 6 ist im Bereich der Biegelinie noch enger an die Streckzone 2 herangeführt.

Die Empfindlichkeit des Biegebalkensensors 10 gemäß Fig. 2 wird u. a. durch die Ein- und Ausschnitte im Bereich der Biegelinie bestimmt. Aus diesem Grunde ist die Hauptzungen-schnittlinie sehr weit in die Streckzone 2 hineingeführt.

Der Keramikplattenkörper 4 des Biegebalkensensors 10 gemäß Fig. 2 kann eine Dicke von 0,1 mm bis 2mm, eine Länge zwischen 5 mm und 50 mm und eine Breite von ebenfalls 5 mm bis 50 mm haben. Auch sind folgende Abmessungen möglich Dicke=0,5 mm, Länge=10 bis 20mm, Breite=10 bis 20mm.

Mit 11 ist ein Randflächenelement dargestellt, das durch eine Auflage- und Dichtfläche 15 begrenzt ist.

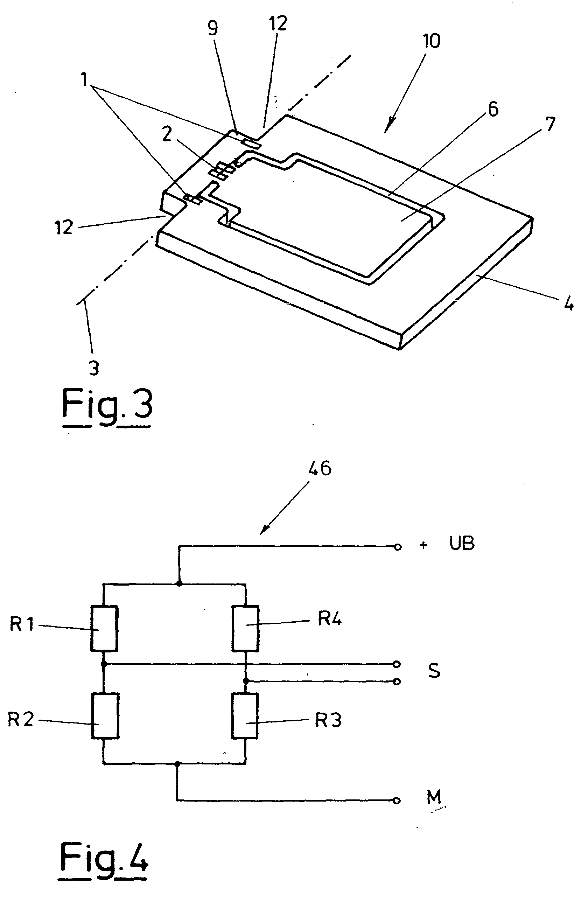

In Fig. 3 ist eine weitere Ausführungsform des Biegebalkensensors 10 gezeigt. Und zwar ist hier der Zusatzzungenkörper 9 durch zwei gegenüberliegende Zusatzausschnittausnehmungen 12 frei geschnitten. Dem nun frei liegenden Zusatzzungenkörper 9 liegt der in den Keramikplattenkörper 4 eingeschnittene Hauptzungenkörper 7 gegenüber. In der Biegelinie III sind in der Stauchzone 1 und in der Streckzone 2 die Widerstände R1 und R2, R3 und R4 aufgebracht.

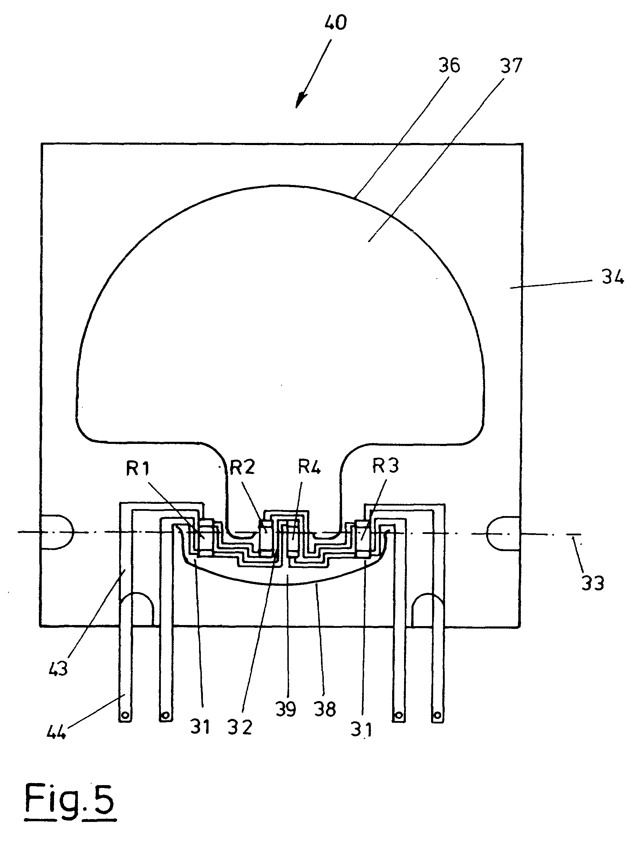

Fig. 5 zeigt einen Biegebalkensensor 40. Hier ist in einen im wesentlichen quadratischen Keramikplattenkörper 34 entlang einer Hauptzungen-Schnittlinie 36 ein Hauptzungenkörper 37 und dem gegenüberliegend entlang einer Zusatzzungen-Schnittlinie 38 ein Zusatzzungenkörper 39 ausgeschnitten. Beide Zungenkörper 37, 39 weisen eine zungenähnliche Konfiguration auf.

In einer mit 33 bezeichneten Biegelinie sind in der in der Mitte liegenden Streckzone 32 die Widerstände R2 und R4 und in den beiden außen liegenden Stauchzonen 31 jeweils der Widerstand R1 und R3 aufgebracht. Die Widerstände R1, R2, R3, R4 sind durch Leiterbahnen 43 verbunden, von denen Anschlußleitungen 44 nach außen führen.

Die Widerstände R1, R2 und R3 sowie die Leiterbahnen 43 werden auf dem Keramikplattenkörper 4, 34 in Dickschichttechnik aufgebracht.

Die zusammengeschalteten Widerstände R1, R2, R3, R4 ergeben die in Fig. 4 dargestellte Wheatstonebrücke 46. In einem Diagonalzweig ist eine Spannungsqwelle UB gegenüber Masse M vorhanden. Im anderen Brückenzweig wird ein Sensorsignal S abgegriffen.

Der Hauptzungenkörper 7, 37 ergibt mit dem Zusatzzungenkörper 9, 39 einen sogenannten Biegebalken innerhalb eines zugehörigen Trägerelements 4, 34, welcher so gestaltet ist, daß bei relativer Auslenkung des Hauptzungenkörpers gegenüber dem Trägerelement durch die ausgeübte Kraft F im Zusatzzungenkörper im Bereich Biegelinie 3, 33 u. a. auf der Oberfläche sowohl Druck- als auch Zugspannung erzeugt werden. Durch die Anordnung der zug- bzw. druckempfindlichen Widerstande R1, R2, R3, R4 im Bereich der Biegelinie 3, 33 und die Verschaltung zur Wheatstonebrücke 46 gemäß Fig. 4 erhält man den Biegebalkensensor 10, 40, der gekennzeichnet ist durch
a) hohe Linearität des Sensorsignals S,
b) einen relativ einfachen Aufbau, da der Biegebalken im Keramikplattenkörper integriert ist und nicht zusätzlich befestigt werden muß, was in Abhängigkeit von der Verbindungsart zu Befestigungsproblemen sowie zu Nichtlinearitäten, zu unerwünschten Temperaturabhängigkeiten und Driften des Ausgangssignals führen kann,
c) einen geringen Offset, da sich die nötigen Widerstände R1, R2, R3 und R4 alle auf einer Seite des Keramikplattenkörpers 4, 34 befinden und bei entsprechender Gestaltung auch in geringem räumlichen Abstand zueinander angeordnet werden können, wodurch sich eine hohe Reproduzierbarkeit der Parameter bei einfacher kostengünstiger Technologie ergibt,
d) die Möglichkeit, elektrische und mechanische Parameter, insbesondere ein auftretendes Biegemoment in den Sensorstellen und die daraus resultierende Signalausbeute sowie mechanische Auslenkung des Hauptzungenkörpers auf einfache Weise durch Variation der Stegbreiten im Bereich der Biegelinie, auf denen sich die Widerstände R1, R2, R3, R4 befinden, und durch die Form der Aussparungen, durch Materialauswahl und Materialstärke den praktischen Erfordernissen anpassen zu können.

Durch eine entsprechende Gestaltung der Schnittlinien 6, 8 bzw. 36, 38 lassen sich Spannungsspitzen im Material des Keramikplattenkörpers 4, 34, die zu Rissen führen können, reduzieren.

Anstelle eines Keramikplatterkörpers 4, 34 können auch andere Trägermaterialien in Kombination mit geeigneten Widerstandsmaterialien Verwendung finden, z. B. Metallplatten mit aufgebrachten Dickschicht- und Dünnschicht-Widerständen oder Glas-, Keramik- und bei geringen Genauigkeitsanforderung auch Kunststoffplatten mit aufgebrachten Dehnmeßstreifen.

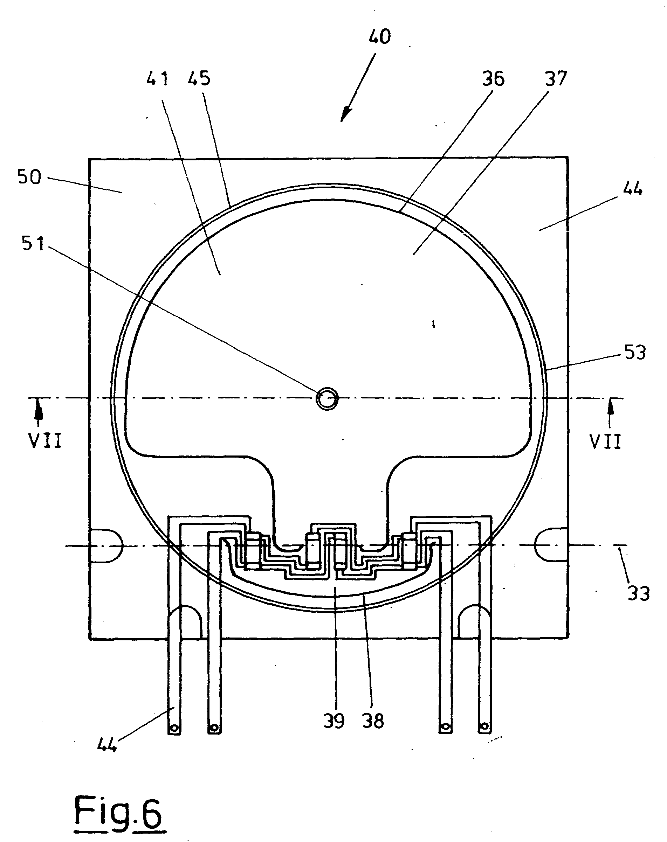

In den Fig. 6 bis 9 sind Aufbauten eines Drucksensors mit einem Biegebalkensensor insbesondere gemäß Fig. 5 gezeigt.

Der Biegebalkensensor 40 ist, wie auch der Biegebalkensensoren gemäß Fig. 2, gegenüber den Biegebalkensensoren 10 aus den Fig. 1 und 3, durch einen Rand des Trägerelements 4, 34 ergänzt, das damit ringförmig das Hauptzungenelement 7, 37 und das Zusatzzungenelement 9, 39 mit den Widerständen R1, ... in der Form umschließt, daß die Widerstände R1, R2, R3, R4 weitestgehend vom Trägerelement mechanisch entkoppelt sind, so daß dieses ringförmige Randflächenelement 11 voeteilhaft als Auflage- und Dichtfläche 45 verwendet wird.

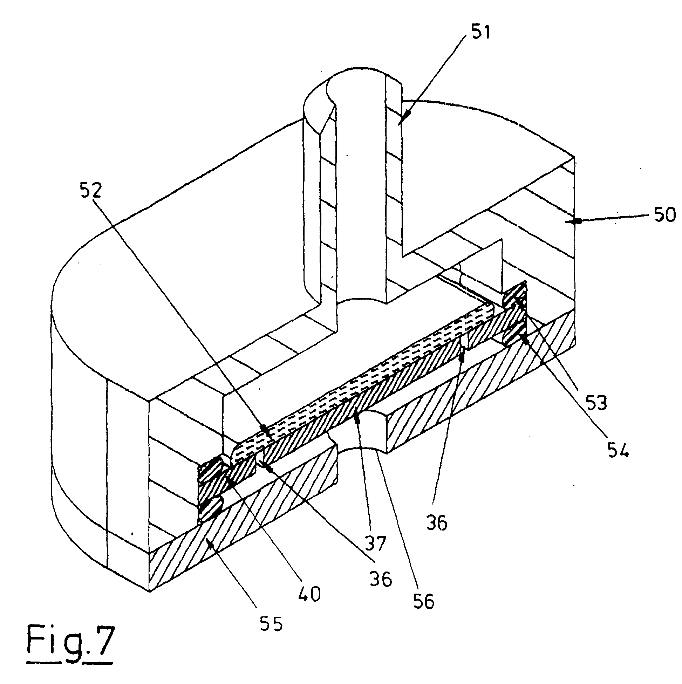

Wie die Fig. 6 und 7 zeigen, wird entlang der Auflage- und Dichtfläche 45 der Biegebalkensensor 40 zwischen zwei elastische Dichtungselemente 53, 54 eingespannt. Bei den elastischen Dichtungselementen handelt es sich jeweils um Ringdichtungselemente.

Wie insbesondere die Fig. 7 zeigt, drückt auf das Ringdichtungselement 53 ein Gehäusekörper 50, der in einen Anschlußhohlkörper 51 übergeht. Auf der gegenüberliegenden Seite wird das Ringdichtungselement 54 durch ein Basiskörperelement 55 angedrückt, in das zum Druckausgleich eine Basisausnehmung 56 eingebracht ist. Das Basiskörperelement 55 ist als Leiterplattenelement ausgebildet.

Auf den Biegebalkensensor 40 wird im Bereich des Ringdichtungselements 53 ein Gelschichtkörper 52 zur Abdichtung der Schnittlinien 36 und 38 aufgebracht.

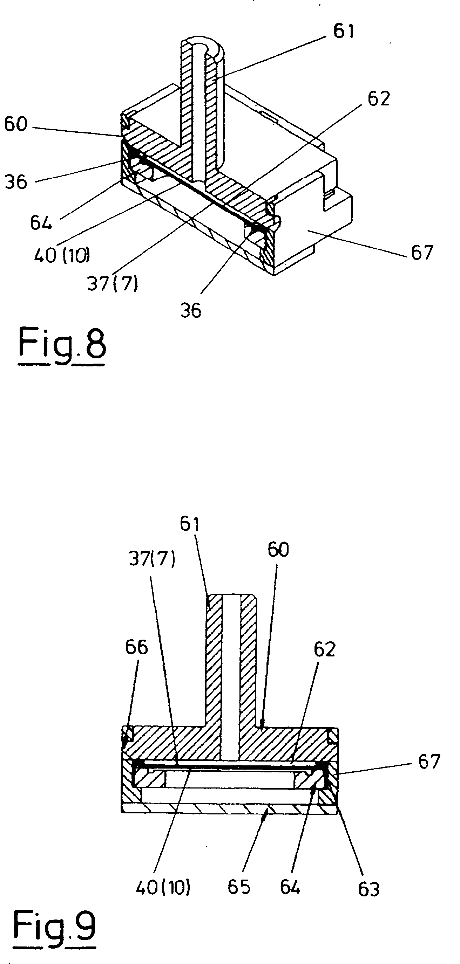

In den Fig. 8 und 9 ist eine weitere Aufbauvariante des Drucksensors unter Einsatz des Biegebalkensensors 40 dargestellt.
Hier wird der Biegebalkensensor 40 mit seiner Auflagefläche auf ein Unterlegringelement 64 gelegt. Das Unterlegringelement kann vorteilhafterweise wegen der einfachen präzisen Herstellbarkeit und der hohen Steifigkeit aus Metall hergestellt sein. Das Unterlegringelement und der Biegebalkensensor 40 befinden sich in einem Gehäuse aus Kunststoff, das aus einem Deckelkörperelement 60 besteht, an das sich ein Anschlußhohlkörperelement 61 anschließt.

Auf der druckbeaufschlagten Seite des Biegebalkensensors 40 (vgl. Fig. 9) befindet sich ein elastisches Dichtungselement in Form eines Ringdichtungselements, welches durch das Dekkelkörperelement 60 vorgespannt wird, der in einem Deckelkörperwandelement 67 mit Schnappverbindungen 66 eingerastet wird. Diese Anordnung ergibt einen einfachen kostengünstigen Aufbau, der bezüglich der Beeinflussung des Sensorsignals durch äußere mechanische und thermische Einflüsse sehr robust ist. Ursache dafür ist die Verspannung des Sensorelements zwischen Dichtring und steifer Unterlegscheibe im Bereich des ringförmigen, von den Widerständen R1, R2, R3, R4 mechanisch entkoppelten Trägerelements 34.

Auf den Biegebalkensensor 40 wird ein Gelschichtkörper 62 aufgebracht, der von dem Dichtungsringelement 63 umfaßt ist und die Schnittlinien 36 und 38 abdichtet.

Der Gelschichtkörper 62 besteht ebenso wie der Gelschichtkörper 52 aus einem dielektrischen Silicongel, z. B. der Marke Sylgard 527 A & B. Hierbei handelt es sich um eine flüssige Zweikomponenten-Siliconeinbettmasse geringer Viskosität, die an sich speziell konzipiert ist zum Schutz der elektrischen Eigenschaften elektronischer Schaltkreise. Erfindungswesentlich ist, daß das Silicongel als Membran in einen vollkommen neuen Anwendungszusammenhang gebracht wird.

Das transparente Produkt vernetzt am Einsatzort zu einer polsternden und selbstheilenden sowie nachgiebigen gelartigen Masse, wenn die beiden Komponenten im Verhältnis 1 : 1 - nach Gewicht oder Volumen - gründlich vermischt werden.

Das vernetzte Gel behält die spannungsentlastenden und selbstheilenden Eigenschaften einer Flüssigkeit, verliert die Fließfähigkeit und entwickelt dabei die Dimensionsstabilität eines festen Elastomers. Die einzigartigen Eigenschaften bleiben bei extrem hohen und niedrigen Temperaturen erhalten und gehen auch dann nicht verloren, wenn das Material fortgesetzt bei Ruhetemperatur eingesetzt wird.

Typische Eigenschaften des Silicongel Syslgard 527 A & B sind weiterhin folgende
- Farbe: klar / eingefärbt, z. B. rot
- spezifisches Gewicht bei +25°C: 0,97
- Viskosität bei +25°C, mPa.s²: 500
- nicht flüssiger Anteil, zwei Stunden bei 150°C in %: 98,0
- Penetration, nach Vernetzung, bei +25°C, x10⁻¹ mm: 50
- Volumenausdehnungskoeffizient, 1/K: 9,9 x 10⁻⁴
- Durchschlagsfestigkeit, nach Vernetzung bei +25°C, KV/mm: 17
- Dielektrizitätskonstante bei 100 Hz: 2,95
   bei 100 kHz: 2,95
- Dielektrischer Verlustfaktor bei 100 Hz: 0,0025
   bei 100 kHz: 0,00015
- Spezifischer Durchgangswiderstand, Ohm x cm: 2,33 x 10⁻¹⁵
- Lichtbogenfestigkeit, s 182.

Mit dem Gelschichtkörper 52, 62 erhält man, in Verbindung mit den Zungenelementen 37, 39, eine geschlossene Fläche, die als Druckmembran fungiert. Resultat ist ein Druckmeßsensor, welcher den Biegebalkensensor und die Druckmembran zu einem Bauteil vereinigt. Die Hauptzungen- und ZusatzzungenSchnittlinien können zur Optimierung der Signalausbeute, zur Anpassung an vorhandene Einbauverhältnisse und zur Vermeidung von Spannungsspitzen variiert werden.

Zur Signalverarbeitung ist das Basiskörperelement als Leiterplatte mit entsprechender Elektronik und den notwendigen Kontaktelementen an dem Gehäuse angeordnet.

Der beschriebene Drucksensor weist mit dem Biegebalkensensor folgende Vorteile auf:
A) Hohe Linearität des durch einen Biegebalken (gebildet durch den Hauptzungenkörper und den Zusatzzungenkörper) erzeugten Signals im Gegensatz zur prinzipiellen nichtlinearen Kennlinie einer üblichen Druckmeßzelle, bei der sich die Widerstandsmeßbrücke auf einer Druckmembran befindet.
B) Einsparung einer zusätzlich nötigen Druckmembran, wenn der Druck mittels Biegebalken gemessen werden soll, wie bei bekannten Lösungen realisiert. Daraus resultiert ein kompakter und kostengünstiger Aufbau.
C) Die Eigenfrequenz ist wegen der geringen Balkenmasse höher als bei Lösungen mit Biegebalken und zusätzlicher Membran, was bei dynamischen Anwendungen vorteilhaft ist.
D) Kostengünstige Herstellung des Sensorelements durch die Möglichkeit, effektive Herstellungsverfahren wie Siebdruck auf Großkeramiken und preiswerte Keramikelemente der Massenfertigung zu verwenden.

Hinsichtlich der Ausgestaltung des Biegebalkensensors und damit auch des Drucksensors bestehen noch Folgevariationsmöglichkeiten.

Anstelle der in Fig. 4 gezeigten Vollbrücke lassen sich prinzipiell auch Halbbrücken realisieren.

Die vorteilhaft dünnen Haupt- und Zusatzzungenschnittlinien können bei entsprechender mechanischer Dimensionierung in Verbindung mit entsprechend mechanisch festeren Vergußmassen durch breitere Schlitze ersetzt werden.

Die U- und ringförmigen Trägerelemente 4, 34 können prinzipiell an einer oder an mehreren Stellen unterbrochen sein.

Möglich ist auch der druckdichte Verschluß der Aussparungen mit einem entsprechend dimensionierten, flächig aufgebrachten Membrankörper. Diese Lösung hat gegenüber der Variante Biegebalken mit separater Druckmembran immer noch die Vorteile, daß der Aufbau erheblich einfacher ist und die Membran durch Einsparung sonst nötiger Stützelemente leichter und die Eigenfrequenz des Systems dadurch höher ist.

Das Unterlegringelement 64 kann, entsprechende Dimensionierung vorausgesetzt, Teil des Gehäuses sein. Die Überlastsicherung kann ebenfalls Teil des Gehäuses sein und muß nicht unbedingt in die Scheibe integriert werden. Bei Auftreten von Unterdruck kann sich eine Überlastsicherung auch im Deckelkörperelement 60 befinden. Zum Ausgleich von Fertigungstoleranzen kann die Überlastsicherung einstellbar sein, z. B. in Form einer Einstellschraube.

Bei Auftreten von höheren Drücken ist es sinnvoll, den Gehäusekörper und den Deckelkörper aus Metall zu fertigen. Die Verbindung zwischen Gehäuse und Deckel kann durch alle üblichen Verbindungsverfahren wie Schrauben, Bördeln, Schweißen, Kleben und dergleichen erfolgen.

Zur Messung von Relativdrücken, die unabhängig vom Umgebungsdruck sind, ist es möglich, auf beiden Seiten des Biegebalkensensors 10, 40 jeweils eine Druckkammer anzuordnen, d. h. das Basiskörperelement 55 wird wie der Gehäusekörper 50 druckdicht gestaltet und ebenfalls mit einem Anschlußhohlkörperelement versehen.

## Patentansprüche

1. Kraftmeßvorrichtung, die wenigstens
- ein Trägerkörperelement (4; 34) aufweist, auf das
- eine Kraft (F) gerichtet ist und auf dem
- Widerstandselemente (R1, R2, R3, R4) angeordnet sind,
**dadurch gekennzeichnet,**
- **daß** in das Trägerkörperelement (4; 34) entlang einer Schnittlinie (6, 8; 36, 38) bis zu einer Biegelinie (3; 33) wenigstens ein Zungenabschnitt (7, 8; 37, 38) angeschnitten ist und
- **daß** auf das Trägerkörperelement (4; 34) in der Biegelinie (3; 33) und zu einer Seite der Schnittlinie (6, 8; 36, 38) wenigstens ein Widerstandselement (R1, R2, R3, R4) angeordnet ist.

2. Vorrichtung nach Anspruch 1, **dadurch gekennzeichnet, daß** in das Trägerkörperelement (4; 34) entlang einer Hauptzungen-Schnittlinie (6; 36) wenigstens teilweise bis zur Biegelinie (3; 33) ein Hauptzungenkörper (7; 37) und dem Hauptzungenkörper (7; 37) gegenüberliegend entlang einer Zusatzzungen-Schnittlinie bis wenigstens teilweise zur Biegelinie (3; 33) ein Zusatzzungenkörper (9; 39) eingeschnitten sind.

3. Vorrichtung nach Anspruch 1 oder 2, **dadurch gekennzeichnet, daß** in einer ersten Biegelinie (3; 33) in einer ersten Streckzone (2; 32) zwischen der Schnittlinie (6, 18, 36, 38) ein erstes und in einer daneben liegenden ersten Stauchzone ein zweites Widerstandselement (R1, R2, R3, R4) angeordnet ist.

4. Vorrichtung nach Anspruch 1 oder 2, **dadurch gekennzeichnet, daß** auf einer zweiten Biegelinie (3; 33) in einer zweiten Streckzone (2; 32) zwischen der Hauptzungen-Schnittlinie (6; 36) ein drittes und ein viertes Widerstandselement (R2, R4), auf einer zweiten Stauchzone (1, 31) zwischen der Haupt- und der Zusatzzungen-Schnittlinie (6, 8; 36, 38) ein fünftes Widerstandselement (R1) und auf einer dritten Stauchzone (1; 31) zwischen der Haupt- und der Zusatzzungen-Schnittlinie ein sechstes Widerstandselement (R3) angeordnet ist.

5. Vorrichtung nach einem der Ansprüche 1 bis 4, **dadurch gekennzeichnet, daß** die Haupt- und die Zusatzzungen-Schnittlinie eine Spaltdicke von 0,001 bis 2,0 mm aufweisen.

6. Vorrichtung nach einem der Ansprüche 1 bis 5, **dadurch gekennzeichnet, daß** die Widerstandselemente (R1, R2, R3, R4) mit Leiterbahnen (43) verbunden sind.

7. Vorrichtung nach einem der Ansprüche 1 bis 6, **dadurch gekennzeichnet, daß** die Widerstandselemente (R1, R2, R3, R4) durch die Leiterbahnen (43) zu einer Wheatstonebrücke (46) verbunden sind.

8. Vorrichtung nach einem der Ansprüche 1 bis 6, **dadurch gekennzeichnet, daß** die Widerstandselemente (R1, R2, R3, R4) und die Leiterbahnen (43) im Dickschicht-Verfahren auf das Trägerkörperelement (4; 34) aufgebracht sind.

9. Vorrichtung nach einem der Ansprüche 1 bis 6, **dadurch gekennzeichnet, daß** die Widerstandselemente (R1, R2, R3, R4) und die Leiterbahnen (43) im Dünnschicht-Verfahren auf das Trägerkörperelement (4; 34) aufgebracht sind.

10. Vorrichtung nach einem der Ansprüche 1 bis 6, **dadurch gekennzeichnet, daß** die Widerstandselemente (R1, R2, R3, R4) und die Leiterbahnen (43) als integrierter Schaltkreis hergestellt sind.

11. Verwendung einer Kraftmeßeinrichtung nach einem der vorhergehenden Ansprüche 1 bis 10 für eine Druckmeßeinrichtung, **dadurch gekennzeichnet, daß** auf das Trägerelement (4; 34) ein umlaufendes Dichtungselement (53, 54; 63, 64) und ein Gelschichtkörper (52; 62) aus einem Silicongel aufgebracht wird.
